# NEUE EUROPÄISCHE PATENTSCHRIFT

(11) **EP 0 583 728 B2**
(45) Veröffentlichungstag und Bekanntmachung des Hinweises auf die Entscheidung über den Einspruch: **28.08.2002**
(45) Hinweis auf die Patenterteilung: 03.12.1997
(21) Anmeldenummer: 93112873.0
(22) Anmeldetag: 11.08.1993
(51) Int. Cl.: C08G 18/46, C09D 175/06, C08G 18/08

(54) **Wasserverdünnbare Zweikomponenten-Überzugsmasse**
Water-dilutable two-component coating compounds
Composition de revêtement à deux composants diluables à l'eau

(30) Priorität: 19.08.1992 DE 4227355
(43) Veröffentlichungstag der Anmeldung: 23.02.1994
(73) Patentinhaber: Solutia Germany GmbH & Co. KG, 55252 Mainz-Kastel (DE)
(72) Erfinder: Schwab, Michael Dr., D-65527 Oberjosbach (DE); Zöller, Joachim Dr., D-55128 Mainz (DE)

(56) Entgegenhaltungen:
- EP-A- 0 039 162
- EP-A- 0 496 205
- EP-A- 0 537 568
- WO-A-93/09157
- DE-A- 2 833 845
- US-A- 4 150 946
- CHEMICAL ABSTRACTS, vol. 96, no. 10, 8. März 1982, Columbus, Ohio, US; abstract no. 69932e, 'POLYURETHANE WATER DISPERSIONS' Seite 41 ;Spalte 1 ; & JP-A-61 135 547 (TOYOBO) 23. Oktober 1981

## Beschreibung

Die Erfindung betrifft eine wasserverdünnbare Zweikornponenten-Überzugsmasse auf Basis von Polyesterharzen, ein Verfahren zu deren Herstellung und deren Verwendung als Beschichtungsmittel.

Die Umstellung von konventionellen Lacken auf wasserverdünnbare Systeme ist in vollem Gange. Insbesondere bei 1 -Komponenten-Systemen hat die Ablösung konventioneller Bindemittel durch wäßrige bereits deutliche Fortschritte gemacht.

Schwierig gestaltet sich der Einsatz konventioneller Bindemittel in hochwertigen 2-Komponenten-Systemen. Insbesondere bei chemisch vernetzenden Polyurethanlacken, die aufgrund ihrer hervorragenden Eigenschaften auf dem Beschichtungssektor eine große Bedeutung haben, konnte auf organische Lösemittel bisher nicht verzichtet werden. Die Verwendung wäßriger Bindemittel schien problematisch, da die als Härter eingesetzten Polyisocyanat-Verbindungen mit Wasser unter Bildung von N-substituierten Polyharnstoff-Verbindungen und Abspaltung von Kohlendioxid reagieren.

Aus der EP 0 358 979 ist bekannt, daß spezielle Polyhydroxypolyacrylate in der Lage sind, die Polyisocyanathärter in Wasser zu emulgieren und zu vernetzenden Filmen auszuhärten.

In EP 0 469 389 wird eine Zweikomponenten-Überzugsmasse beschrieben, die aus einer wäßrigen Dispersion eines Polyurethans und einem wasserdispergierbaren Polyisocyanat besteht, die bei Raumtemperatur aushärtet.

Überraschenderweise wurde jetzt gefunden, daß ausgewählte, nachstehend näher beschriebene wasserverdünnbare Polyesterharze besonders günstige Kombinationspartner mit ausgezeichneter Emulgatorwirkung für nicht blokkierte Polyisocyanathärter darsteilen.

Gegenstand der Erfindung ist daher eine wasserverdünnbare Zweikomponenten-Überzugsmasse, enthaltend
1) eine Polyisocyanatkomponente, bestehend aus einem oder mehreren organischen Polyisocyanaten, und
2) ein Polyesterharz, welches aus den Edukten (a), (b), (c), (d) und (e) oder deren esterbildenden Derivaten aufgebaut ist, wobei die Summe der Reaktanden 100 mol% entspricht und das Verhältnis der Summe der Hydroxyläquivalente zur Summe der Carboxyläquivalente in den Reaktanden zwischen 1:0,5 und 1:2,0 liegt.

Das Polyesterharz ist aufgebaut aus
(a) mindestens einer Dicarbonsäure, die kein Sulfomonomer darstellt,
(b) 0 bis 15, vorzugsweise 1 bis 6 mol% mindestens eines difunktionellen Phosphonomonomers, dessen funktionelle Gruppen Carboxyl- und/oder Hydroxylgruppen sind, mit mindestens einer Phosphonatgruppe,
(c) mindestens eines Glykols,
(d) 5 bis 40, vorzugsweise 8 bis 20 mol% von zwei oder mehreren höherfunktionellen Verbindungen (Funktionalität >2), deren funktionelle Gruppen Hydroxyl- und/oder Carboxylgruppen sind, und
(e) 0 bis 20 mol% einer monofunktionellen Carbonsäure.

In diesem Polyesterharz liegen die Mengen an freien Hydroxylgruppen zwischen 30 und 350 Milliäquivalenten OH/100 g, bevorzugt zwischen 100 und 250 meq (OH)/100 g, und der Gehalt an freien neutralisierten und/oder neutralisierbaren Säuregruppen, insbesondere Phosphon- und Carbonsäuregruppen, liegt zwischen 5 und 350 meq/100 g, vorzugsweise zwischen 10 und 120 meq/100 g.

Weiterhin Gegenstand der Erfindung ist ein Verfahren zur Darstellung dieser Überzugsmasse sowie deren Verwendung als Beschichtungsmittel.

Bei der Polyisocyanatkomponente 1) handelt es sich um beliebige organische Polyisocyanate, vorzugsweise Diisocyanate mit aliphatisch, cycloaliphatisch, araliphatisch und/oder aromatisch gebundenen, freien Isocyanatgruppen, die bei Raumtemperatur flüssig sind. Die Polyisocyanatkomponente 1) weist bei 23 °C im allgemeinen eine Viskosität von 50 bis 20 000 mPa.s auf. Besonders bevorzugt handelt es sich bei der Polyisocyanatkomponente 1) um Polyisocyanate oder Polyisocyanatgemische mit ausschließlich aliphatisch und/oder cycloaliphatisch gebundenen Isocyanatgruppen mit einer zwischen 2,0 und 5,0 liegenden (mittleren) NCO-Funktionalität.

Falls erforderlich können die Polyisocyanate in Abmischung mit geringen Mengen an inerten Lösungsmitteln zum Einsatz gelangen, um die Viskosität auf einen Wert innerhalb der genannten Bereiche abzusenken. Die Menge derartiger Lösungsmittel wird jedoch bevorzugt so bemessen, daß in den letztendlich erhaltenen erfindungsgemäßen Beschichtungsmitteln maximal 30 Gew.-% Lösungsmittel vorliegt, wobei auch das gegebenenfalls in den Polyesterharzdispersionen oder -lösungen noch vorliegende Lösungsmittel mit in die Berechnung eingeht. Geeignete Lösungsmittel für die Polyisocyanate sind beispielsweise aromatische Kohlenwasserstoffe wie beispielsweise "Solventnaphtha" oder auch andere Lösungsmittel wie beispielsweise Butylglykol, N-Methylpyrrolidon, Methoxypropanol, Isopropanol, Butanol, Aceton.

Bei den Polyisocyanaten, vorzugsweise Diisocyanaten, handelt es sich um die auf dem Polyurethan- bzw. Lackgebiet bekannten Verbindungen, wie aliphatische, cycloaliphatische oder aromatische Diisocyanate. Diese besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen alraliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'- Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), p-Xylylendiisocyanat und a,a,a',a'-Tetramethylm- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-Offenlegungsschrift 29 28 552 verwiesen.

Sehr gut geeignet sind beispielsweise "Lackpolyisocyanate" auf Basis von Hexamethylendiisocyanat oder von 1-Isocyanato-3,55-trimethylcyclohexylisocyanat (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen Restgehalt von weniger als 0,5 Gew-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen auf N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphanen entstehen. Besonders bevorzugt sind die zuletzt genannten Gemische einer Viskosität bei 23 °C von 50 bis 20 000 mPa.s und einer zwischen 2,0 und 5,0 liegenden NCO-Funktionalität.

Geeignet sind weiterhin hydrophile Polyisocyanate, die durch eine ausreichende Anzahl anionischer Gruppen und/oder durch terminale oder laterale Polyetherketten in der wäßrigen Phase stabilisiert werden, wie sie in EP 0 469 389, EP 0 061 628 und EP 0 206 059 beschrieben sind.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanatoisocyanurate, die eventuell im Anschluß an ihre Herstellung vorzugsweise destillativ von überschüssigen monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen.

Die Polyisocyanatkomponente 1) kann im übrigen aus beliebigen Gemischen der genannten Polyisocyanate bestehen.

Das Polyesterharz (2) ist, wie oben beschrieben, aus den Edukten (a), (b), (c), (d) und (e) oder deren Esterbildenden Derivaten aufgebaut.

Die hier verwendeten Begriffe höher-, multi- oder polyfunktionell bezeichnen Verbindungen mit mehr als zwei reaktiven Hydroxyl- und/oder Carboxyl-Gruppen, der Begriff Glykol steht für eine Verbindung mit zwei, der Begriff Polyol für eine Verbindung mit mehr als zwei Hydroxylsubstituenten.

Die Dicarbonsäurekomponente (a) des Polyesters besteht aus aromatischen, cycloaliphatischen oder aliphatischen, gesättigten oder ungesättigten Dicarbonsäuren sowie Dimerfettsäuren oder aus Mischungen zweier oder mehrerer dieser Dicarbonsäuren. Beispiele für diese Dicarbonsäuren sind Oxal-, Malon-, Glutar-, Adipin-, Pimelin-, Azelain-, Sebacin-, Fumar-, Malein-, und Itaconsäure, 1,3-Cyclopentandicarbonsäure, 1,2-Cyclohexandicarbonsäure, 1,3-Cyclohexandicarbonsäure, 1,4-Cyclohexandicarbonsäure, Phthal-, Terephthal-, Isophthalsäure, 2,5-Norbornandicarbonsäure, 1,4-Naphthalindicarbonsäure, Diphenyldicarbonsäure, 4,4'-Sulfonyldibenzoesäure und 2,5-Naphthalindicarbonsäure sowie deren Ester oder deren Anhydride.

Bevorzugte Dicarbonsäurekomponenten (a) sind Phthal-, Isophthalund Terephthalsäure, Phthalsäureanhydrid, Adipin-, Bernsteinsäure und deren Anhydrid, Dimerfettsäuren, Sebazin- und Azelainsäure, 1,3-Cyclohexandicarbonsäure und Glutarsäure sowie deren Ester.

Bei Komponente (b) des Polyesters handelt es sich um eine difunktionelle, aromatische, cycloaliphatische oder aliphatische Verbindung mit reaktiven Carboxyl- und/oder Hydroxylgruppen, die desweiteren eine P(O)(OX)₂- Gruppe aufweist, wobei X Wasserstoff oder ein Metallion wie z.B. Na⁺, Li⁺, K⁺, Mg²+, Ca²+, Cu²⁺ oder ein stickstoffhaltiges Kation von aliphatischen, cycloaliphatischen oder aromatischen Verbindungen wie z.B.

Ammoniak, Triethylamin, Dimethylethanolamin, Diethanolamin, Triethanolamin, Pyridin ist.

Die -P(O)(OX)₂- Gruppen können an einen aromatischen Kern wie z. B. Phenyl, Naphthyl, Diphenylyl, Methylendiphenyl oder Anthracenyl gebunden sein.

Der Anteil der Komponente (b) beträgt 0 bis 15 mol%, besonders bevorzugt 1 bis 6 mol%.

Die Glykolkomponente (c) kann aus niedermolekularen aliphatischen, cycloaliphatischen oder aromatischen Glykolen, aus Polyhydroxypolyethern oder aus Polycarbonatpolyolen bestehen. Als Beispiele für die niedermolekularen Glykole seien genannt: Ethylenglykol, 1,2-Propandiol, 1,3-Propandiol, 2,2-Dimethyl-1,3-propandiol, 1,3-Butandiol, 1,4-Butandiol, 1,5-Pentandiol, 1,6-Hexandiol,2,2,4-Trimethyl-1,6-hexandiol, 1,2-Cyclohexandimethanol, 1,3-Cyclohexandimethanol, 1,4-Cyclohexandimethanol, Perhydro-bisphenol A, p-Xylylendiol, 2-Ethyl- und 2-Butylpropandiol.

Als Polyhydroxy-polyether kommen Verbindungen der Formel

H -[- O - (CHR)ₙ-]ₘ OH

infrage, in der
- R: Wasserstoff oder ein niedriger Alkylrest, gegebenenfalls mit verschiedenen Substituenten, ist,
- n: eine Zahl von 2 bis 6 und
- m: eine Zahl von 10 bis 120 ist.

Beispiele sind Poly(oxytetramethylen)glykole,

Poly(oxyethylen)glykole und Poly(oxypropylen)glykole. Die bevorzugten Polyhydroxy-polyether sind Poly(oxypropylen)glykole mit einem Molekulargewicht im Bereich von 400 bis 5000.

Die Polycarbonat-polyole bzw. Polycarbonatdiole sind Verbindungen, die der allgemeinen Formel 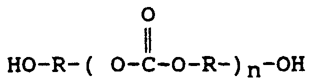 entsprechen, worin R einen Alkylenrest bedeutet. Diese OH-funktionellen Polycarbonate lassen sich durch Umsetzung von Polyolen wie Propandiol-1,3, Butandiol-1,4, Hexandiol-1,6, Diethylenglykol, Triethylenglykol, 1,4-Bishydroxymethylcyclohexan, 2,2-Bis(4-hydroxycyclohexyl)propan, Neopentylglykol, Trimethylolpropan, Pentaerythrit, mit Dicarbonaten, wie Dimethyl-, Diethyl- oder Diphenylcarbonat oder Phosgen herstellen. Gemische solcher Polyole können ebenfalls eingesetzt werden.

Der Anteil der Komponente (c) ist so zu bemessen, daß das eingangs angegebene Verhältnis von Hydroxyäquivalenten zu Carboxyläquivalenten erfüllt ist.

Als höherfunktionelle Komponente (d), die bevorzugt 3 bis 6 Hydroxyl- und/oder Carboxylgruppen enthält, werden Trimethylolpropan, Trimethylolethan, Glycerin, Ditrimethylolpropan, Pentaerythrit, Dipentaerythrit, Bis-hydroxyalkancarbonsäuren wie Dimethylolpropionsäure und Trimellitsäureanhydrid sowie Polyanhydride wie in DE 28 11 913 beschrieben oder Mischungen zweier oder mehrerer dieser Verbindungen bevorzugt, wobei der Anteil der höherfunktionellen Komponente (d) bevorzugt 5 bis 30 mol%, insbesondere 8 bis 20 mol%, beträgt.

Bei den monofunktionellen Carbonsäuren (e) handelt es sich vorwiegend um Fettsäuren wie die Caprinsäure, Laurinsäure, Stearinsäure und Palmitinsäure, es können jedoch auch verzweigte Carbonsäuren wie die Isovalerinsäure und Isooctansäure eingesetzt werden.

Das Zahlenmittel des Molekulargewichts des Polyesterharzes, experimentell mit Hilfe der Gelpermeationschromatographie bestimmt, kann zwischen 500 und 5000 liegen, bevorzugt wird 1000 bis 3500.

Die Glasübergangstemperatur der Polyester liegt bevorzugt zwischen -60°C und 100 °C.

Um gegebenenfalls eine möglichst quantitative Cokondensation des Phosphonomonomeren zu erreichen, kann es erforderlich sein, die Synthese der beschriebenen Polyester in einem mehrstufigen Verfahren durchzuführen. Es werden dazu in Gegenwart von Katalysatoren zunächst die gesamten hydroxyfunktionellen Komponenten mit den Phosphonomonomeren und gegebenenfalls mit carbonsäurehaltigen Komponenten umgesetzt, so daß bei der Kondensation 95% der für einen quantitativen Umsatz berechneten Destillatmenge erhaltenen werden. Anschließend kommen gegebenfalls die aliphatischen Carbonsäurekomponenten zur Reaktion, wobei die Kondensation bis zum gewünschten Gehalt an Carbonsäureäquivalenten fortgesetzt wird.

Bei Verwendung einer Bishydroxyalkancarbonsäure wird zunächst ein OH-funktioneller Polyester dargestellt, der dann mit der Bishydroxyalkancarbonsäure und einer weiteren Dicarbonsäure zum gewünschten Polyester kondensiert wird.

Werden Polycarbonsäureanhydride zum Einführen der anionischen Gruppen verwendet, so wird ein OH-funktioneller Polyester mit dem Anhydrid zum Halbester umgesetzt und anschließend bis zur gewünschten Säurezahl weiterkondensiert.

Die Reaktion findet bei Temperaturen zwischen 140°C und 240°C, bevorzugt zwischen 160°C und 220°C, statt. Zur Vermeidung von Glykolverlusten erfolgt die Destillation des Kondensates über eine Destillationskolonne. Als Katalysatoren kommen bevorzugt Organometallverbindungen, insbesondere zink-, zinn- oder titanhaltige Verbindungen wie z. B. Zinkacetat, Dibutylzinnoxid oder Tetrabutyltitanat in Betracht. Die Menge an Katalysator beträgt bevorzugt 0.1 bis 1.5 Gew.-% der Menge des Gesamtansatzes.

Die Säuregruppen können bereits in neutralisierter Form über die Einzelkomponenten in den Polyester eingeführt werden, liegen freie Säuregruppen im Polyester vor, so kann gegebenenfalls deren Neutralisation mit wäßrigen Lösungen von Alkalihydroxiden oder mit Aminen, zum Beispiel mit Trimethylamin, Triethylamin, Dimethylanilin, Diethylanilin, Triphenylamin, Dimethylethanolamin, Aminomethylpropanol, Dimethylisopropanolamin oder mit Ammoniak durchgeführt werden.

Die Isolierung des Polyesters kann in Substanz erfolgen, bevorzugt wird jedoch die Herstellung einer 50 bis 95 %igen Lösung in einem wassermischbaren, organischen Lösemittel. In Frage kommen hierfür bevorzugt sauerstoffhaltige Lösemittel wie Alkohole, Ketone, Ester, Ether, z.B: Ethanol, n-Propanol, iso-Propanol, iso-Butanol, Butylacetat und Butylglykol, oder stickstoffhaltige Lösemittel wie z.B. N-Methylpyrrolidon. Die Viskosität dieser Lösungen liegt bei 60°C bevorzugt zwischen 0,5 und 40 Pa.s.

Diese Lösung wird dann zur Herstellung der Polyesterdispersion herangezogen, so daß Anteile von 15 bis 65 Gew.-% Polyester, von 0 bis 30 Gew.-% organischer Lösemittel und von 35 bis 85 Gew.-% Wasser in der Dispersionen vorliegen. Der resultierende pH-Wert beträgt 2 bis 8,5, bevorzugt 4.0 bis 8.0.

Der Gehalt an Polyesterharz in der wäßrigen Überzugsmasse beträgt im allgemeinen 5 bis 40, vorzugsweise 15 bis 30 Gew.-%, bezogen auf die gesamte wäßrige Überzugsmasse.

Neben dem Polyesterharz kann die wäßrige Überzugsmasse als Bindemittel noch bis zu 60, vorzugsweise bis zu 30 Gew.-%, bezogen auf das Polyesterharz, anderer oligomerer oder polymerer Materialien enthalten, wie vernetzungsfähige, wasserlösliche oder wasserdispergierbare Phenolharze, Polyurethanharze, Epoxidharze oder Acrylharze etc., wie beispielsweise in der EP-Offenlegungsschrift 89 497 beschrieben.

Zur Herstellung der gebrauchsfertigen Beschichtungsmittel wird die Polyisocyanatkomponente 1) in der wäßrigen Dispersion/Lösung des Polyesterharzes 2) emulgiert, wobei das gelöste oder dispergierte Polyesterharz die Funktion eines Emulgators für das zugesetzte Polyisocyanat übernimmt. Dies gilt insbesondere für den bevorzugten Fall der Verwendung von nicht hydrophil modifizierten Polyisocyanaten. Möglich ist auch die Verwendung von hydrophil modifizierten Polyisocyanaten als Polyisocyanatkomponente 1), die aufgrund der eingebauten ionischen oder nichtionischen-hydrophilen Zentren selbstdispergierbar sind.

Die Durchmischung kann durch einfaches Verrühren bei Raumtemperatur erfolgen. Die Menge der Polyisocyanatkomponente wird dabei vorzugsweise so bemessen, daß ein NCO/OH-Äquivalentverhältnis, bezogen auf die Isocyanatgruppen der Komponente 1) und die alkoholischen Hydroxylgruppen der Komponente 2) von 0,5:1 bis 5:1, insbesondere 0,8:1 bis 3:1 resultiert.

Vor der Zugabe der Polyisocyanatkomponente können dem Polyesterharz 2), d.h. der Dispersion bzw. Lösung der Polymerisate die üblichen Hilfs- und Zusatzmittel der Lacktechnologie einverleibt werden. Hierzu gehören zum Beispiel Entschäumungsmittel, Verlaufshilfsmittel, Pigmente und Dispergierhilfsmittel für die Pigmentverteilung.

Die so erhaltenen erfindungsgemäßen Überzugsmittel eignen sich für praktisch alle Einsatzgebiete, in denen heute lösemittelhaltige, lösemittelfreie oder andersartige wäßrige Anstrich- und Beschichtungssysteme mit einem erhöhten Eigenschaftsprofil Verwendung finden.

Bevorzugt ist die Verwendung für Decklacke und Einschichtlacke, wobei die zu beschichtenden Substrate zum Beispiel aus Metall, mineralischen Baustoffen, wie Kalk, Zement oder Gips, Faser-Zement-Baustoffe, Beton, Holz oder Holzwerkstoffen, Papier, Asphalt, Bitumen, Kunststoffen diverser Art, Textilien oder Leder bestehen können. Bei den metallenen Substraten handelt es sich in allen Fällen bevorzugt um Automobile.

Weiterhin bevorzugt ist die Verwendung als Grundierung oder Füller, wobei die zu beschichtenden Substrate zum Beispiel aus Metall, mineralischen Baustoffen, wie Kalk, Zement oder Gips, Faser-Zement-Baustoffe, Beton, Holz oder Holzwerkstoffen, Papier, Asphalt, Bitumen, Textilien oder Leder bestehen können. Bei den metallenen Substraten handelt es sich wiederum bevorzugt um Automobile.

### Beispiele:

Die Durchführung der Polyestersynthese erfolgt in einem 41-Vierhalskolben mit aufgesetzter Füllkörperkolonne (Kolonnenrohr: 30 mm Durchmesser, 2000 mm Länge; Füllkörper: Glasringe mit 6 mm Durchmesser und 6 mm Länge) und absteigender Destillationsbrücke, mit Temperaturfühlung des Reaktionsgutes unter Schutzgasatmosphäre (Schutzgaszufuhr, Stickstoff). Werden niedrigsiedende Alkohole, insbesondere Methanol als Kondensat abdestilliert, ist die Vorlage mit einem Eisbad zu kühlen. Die im folgenden verwendeten Kürzel sind auf Seite 23 erläutert.

### Polyester 1

### Einwaagen gemäß Tabelle 1

Neopentylglykol und Trimethylolpropan aufschmelzen, IPS und 1,5 g Dibutylzinnoxid zugeben, aufheizen, so daß die Kopftemperatur 100 °C nicht überschreitet, bei 190°C bis 200 °C kondensieren, bis ein Gehalt an Säuregruppen von 10 meq (COOH)/100 g erreicht ist.

Abkühlen auf 140°C, ADPS und DMPS zugeben, aufheizen, so daß die Kopftemperatur 100°C nicht überschreitet, bei Temperaturen bis zu 200°C kondensieren, bis ein Wert von 64 meq (COOH)/100 g erreicht ist. Danach auf 80°C abkühlen und 62,2 g Dimethylethanolamin und 290 g N-Methylpyrrolidon zugeben und in 2818 g Wasser dispergieren.

### Polyester 2

### Einwaagen gemäß Tabelle 1

Neopentylglykol und Trimethylolpropan aufschmelzen, TPS, IPS und 1,5 g Dibutylzinnoxid zugeben, aufheizen, so daß die Kopftemperatur 100°C nicht überschreitet, bei 190°C bis 200°C kondensieren, bis ein Gehalt an Säuregruppen von 10 meq (COOH)/100 g erreicht ist.

Abkühlen auf 140°C, TMSA zugeben und bei dieser Temperatur rühren bis ein Wert von 71 meq (COOH)/100 g erreicht ist. Danach auf 80°C abkühlen und 175 g N-Methylpyrrolidon und 80 g Dimethylethanolamin zugeben und in 1800 g Wasser dispergieren.

### Polyester 3

### Einwaagen gemäß Tabelle 1

Neopentylglykol und Trimethylolpropan aufschmelzen, TPS, IPS, LS und 2,5 g Dibutylzinnoxid zugeben, aufheizen, so daß die Kopftemperatur 100°C nicht überschreitet, bei 190°C bis 200°C kondensieren, bis ein Gehalt an Säuregruppen von 10 meq (COOH)/100 g erreicht ist.

Abkühlen auf 140°C, ADPS und DMPS zugeben, aufheizen, so daß die Kopftemperatur 100°C nicht überschreitet, bei Temperaturen bis zu 200°C kondensieren, bis ein Wert von 55 meq (COOH)/100 g erreicht ist. Danach auf 80 °C abkühlen und 300 g N-Methylpyrrolidon und 70 g Dimethylethanolamin zugeben und in 2430 g Wasser dispergieren.

Tabelle 1 (*s.u.)

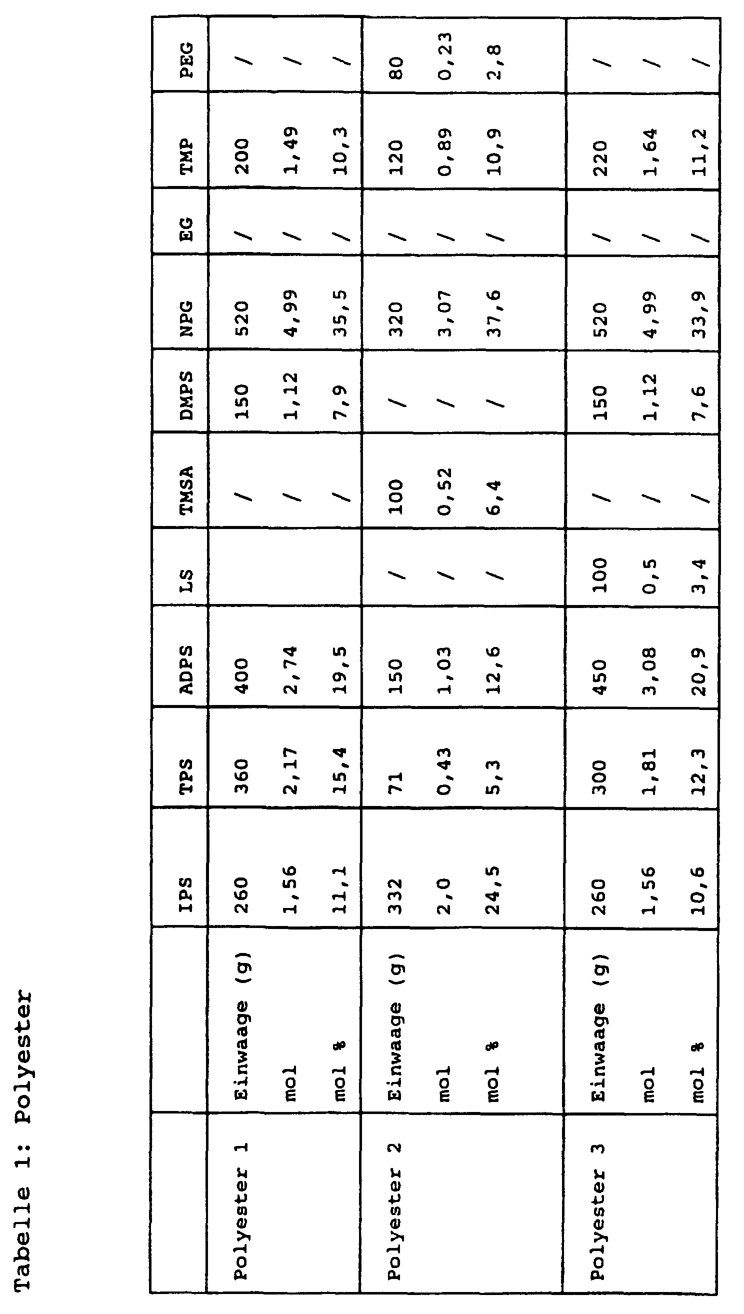

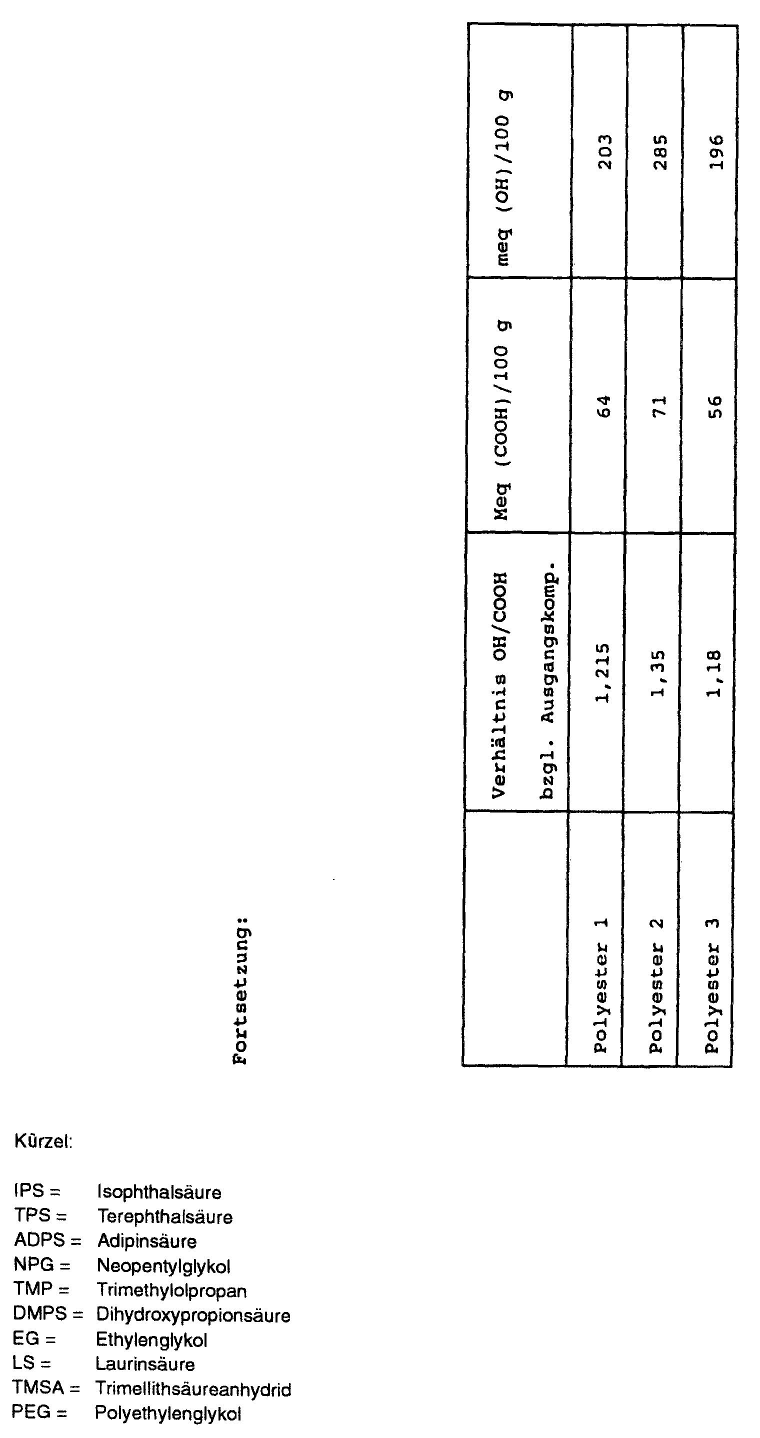

### 2K-Grundierung

Zur Herstellung des Dispergieransatzes werden 65,8 Gew.-Teile des Polyesters (1), (2) oder (3) mit einem Festkörpergehalt von 38 Gew.-% mit 0,2 Gew.-Teilen eines handelsüblichen, siliconfreien Entschäumers (®Additol VXW 4973 der Hoechst AG); 0,3 Gew.-Teilen eines handelsüblichen Netz- und Dispergierhilfsmittels (®Additol XL 250 der Hoechst AG) und 0,4 Gew.-Teilen eines handelsüblichen Verlaufsmittels (®Additol XW 390 der Hoechst AG) vermischt. Nach dem einfachen Unterrühren der Additive werden 14,0 Gew.-Teile Titandioxid (®Kronos 2310 der Kronos-Titan GmbH); 11,0 Gew.-Teile eines Bariumsulfates (®Blanc fixe micro der Sachtleben GmbH); 3,7 Gew.-Teile eines Talkums (Naintsch E 7 der Naintsch Mineralwerke GmbH) und 0,1 Gew.-Teile eines Rußes (Flammruß 101 der Degussa AG) dem Ansatz zugegeben und ca. 30 Minuten unter einem Dissolver bei einer Drehzahl von 6000 U/min dispergiert.

Als Härterkomponente können verschiedene Polyisocyanate eingesetzt werden, wie z.B. ®Desmodur VPLS 2550 und ®Desmodur N 3300 der Bayer AG.

Der Dispergieransatz wurde nun mit 12,5 Gew.-Teilen eines geeigneten Polyisocyanates vermischt, welches vorher evtl. mit Methoxypropylacetat verdünnt wurde und setzt sich erfindungsgemäß wie folgt zusammen:

| | Beispiel A | Beispiel B | Beispiel C |
|---|---|---|---|
| Bindemittel | 1 | 2 | 3 |
| | 25,00 | 25,00 | 25,00 |
| Pigmente | 28,80 | 28,80 | 28,80 |
| Hilfsmittel | 0,90 | 0,90 | 0,90 |
| Gesamtfestkörper | 54,70 | 54,70 | 54,70 |
| Wasser, deionisiert | 42,05 | 42,05 | 42,05 |
| Org. Lösemittel | 3,25 | 3,25 | 3,25 |
| Gesamt | 100,00 | 100,00 | 100,00 |
| Polyisocyanat | 12,50 | 12,50 | 12,50 |
| Methoxypropylacetat | II 6,25 | I 0,00 | II 12,50 |

Die verarbeitungsfertigen Ansätze haben einen Anteil an organischen Lösungsmitteln von nur 2,89 bis 12,60 Gew.-%. Die Lacke werden mit einer Naßfilmschicht von 150 - 300 um (entsprechend einer Trockenschichtstärke von 25 bis 50 µm) auf den Untergrund appliziert und 30 Minuten bei 80 °C im Umluftofen getrocknet.

Die gehärteten Lackfilme der Beispiele A bis C können wie folgt charakterisiert werden:

| Lösemittelbeständigkeit | Bsp. A | Bsp. B | Bsp. C |
|---|---|---|---|
| Isopropanol | gut - mäßig | mäßig | mäßig |
| Isopropanol/Wasser (1:1) | gut | mäßig | mäßig |
| Ethanol | sehr gut -gut | mäßig | mäßig |
| Ethanol/Wasser (1:1) | gut | mäßig | mäßig |
| Superbenzin | gut | mäßig | mäßig |

| | Bsp. A | Bsp. B | Bsp. C |
|---|---|---|---|
| Pendelhärte gem. DIN 53157 | 75"-100" | 25"-40" | 15"-25" |
| Glanz 60° gem. DIN 67530 | 50 % | 88 % | 73 % |
| Tropentest gem. DIN 50017 SK | gut - mäßig | gut | mäßig |
| Salzsprühtest gem. ASTM-B117-69 | gut | sehr gut - gut | sehr gut - gut |
| Decklackstand Steinschlag: | gut | sehr gut | gut |
| Decklackhaftung | gut | gut - mäßig | sehr gut |
| Durchschläge | gut | gut | sehr gut |

### 2K-Decklack

Zur Herstellung des Dispergieransatzes werden 71,1 Gew.-Teile des Polyesters (1) oder (3) mit einem Festkörpergehalt von 38 Gew.-% mit 0,2 Gew.-Teilen eines handelsüblichen, siliconfreien Entschäumers (®Additol VXW 4973 der Hoechst AG); 0,3 Gew.-Teilen eines handelsüblichen Netzund Dispergierhilfsmittels (®Additol XL 250 der Hoechst AG) und 0,4 Gew.-Teilen eines handelsüblichen Verlaufsmittels (®Additol XW 390 der Hoechst AG) vermischt. Nach dem einfachen Unterrühren der Additive werden 24,6 Gew.-Teile Titandioxid (®Kronos 2310 der Kronos-Titan GmbH) dem Ansatz zugegeben und ca. 30 Minuten unter einem Dissolver bei einer Drehzahl von 6000 U/min dispergiert.

Als Härterkomponente können verschiedene Polyisocyanate eingesetzt werden, wie z.B. ®Desmodur VPLS 2550 und ®Desmodur N 3300 der Bayer AG.

Der Dispergieransatz wurde nun mit 13,4 Gew.-Teilen eines geeigneten Polyisocyanates vermischt, welches vorher evtl. mit Methoxypropylacetat vorverdünnt wird.

Die verarbeitungsfertigen Ansätze haben einen Anteil an organischen Lösemitteln von nur 8,5 bis 13,3 Gew.-%. Die Lacke werden mit einer Naßfilmschicht von 200 - 400 um (entsprechend einer Trockenschichtstärke von 30 bis 60 µm) auf den Untergrund appliziert und 30 Minuten bei 80 °C im Umluftofen getrocknet.

Die gehärteten Lackfilme der Beispiele D und E können wie folgt charakterisiert werden:

| Lösemittelbeständigkeit | Bsp. D | Bsp. E |
|---|---|---|
| Isopropanol | sehr gut | sehr gut - gut |
| Isopropanol/Wasser (1:1) | sehr gut | sehr gut - gut |
| Ethanol | sehr gut- gut | gut |
| Ethanol/Wasser (1:1) | sehr gut | gut |
| Superbenzin | sehr gut- gut | gut - mäßig |

| | Bsp. D | Bsp. E |
|---|---|---|
| Pendelhärte gem. DIN 53157 | ca. 115" | ca. 145" |
| Glanz 60° gem. DIN 67530 | ca. 87 % | ca. 87 % |
| Decklackstand Steinschlag: | gut | gut |
| Decklackhaftung | gut | gut |
| Durchschläge | gut | gut - sehr gut |

Die gehärteten Filme sämtlicher Beispiele werden nach folgenden Prüfvorschriften geprüft:
- Pendelhärte:: Gemäß DIN 53 157
- Glanzgrad:: Gemäß DIN 67 530, gemessen bei einem Winkel von 60°.
- Tropentest:: Gemäß DIN 50 017 SK. Nach 240 Stunden, bei einer Luftfeuchte von 100 % und einer Temperatur von 40 °C, wurden Blasenbildung, Glanz und die Beschaffenheit der Lackoberfläche subjektiv nach einer Notenskala beurteilt (1 = sehr gut, 5 = sehr schlecht).
- Salzsprühtest:: Gemäß ASTM-B 117-69. Nach 240 Stunden im Salznebelklima wurden die Blasenbildung und die Rostunterwanderung an den Sollroststellen subjektiv nach einer Notenskala bewertet (1 = sehr gut, 5 = sehr schlecht)
- Decklackstand:: Glanz und Oberfläche des Decklackes wurden subjektiv nach einer Notenskala bewertet (1 = sehr gut, 5 = sehr schlecht)
- Steinschlag:: Die Steinschlagfestigkeit wurde mittels Steinschlag-Prüfgerät nach VDA (Fa. Erichsen, Modell 508) geprüft. Für die vorliegenden Prüfungen wurden jeweils 1 kg Stahlschrot (kantig, 4-5mm) beschleunigt durch Druckluft (2 bar) auf die Prüfbleche geschossen. Bewertet wurden, anhand von Musterblechen, die Decklackhaftung (sehr gut = keine Abplatzung, sehr schlecht = vollständige Enthaftung) und die Durchschläge bis auf das Blech (sehr gut = keine Durchschläge, sehr schlecht = sehr viele Durchschläge).

## Patentansprüche

1. Wasserverdünnbare Zweikomponenten-Überzugsmasse, enthaltend
1) eine Polyisocyanatkomponente, bestehend aus einem oder mehreren organischen Polyisocyanaten, und
2) ein Polyesterharz, welches aus den Edukten (a), (b), (c), (d) und (e) oder deren esterbildenden Derivaten aufgebaut ist, wobei die Summe der Reaktanden 100 mol% entspricht und das Verhältnis der Summe der Hydroxyläquivalente zur Summe der Carboxyläquivalente in den Reaktanden zwischen 1:0,5 und 1:2,0 liegt, wobei
(a) mindestens eine Dicarbonsäure ist, die kein Sulfomonomer ist,
(b) 0 bis 15, vorzugsweise 1 bis 6 mol% mindestens eines difunktionellen Phosphonomonomers ist, dessen funktionelle Gruppen Carboxyl- und/oder Hydroxylgruppen sind, mit mindestens einer Phosphonatgruppe,
(c) mindestens ein Glykol ist,
(d) 5 bis 40 mol% von zwei oder mehreren höherfunktionellen Verbindungen (Funktionalität >2) ist, deren funktionelle Gruppen Hydroxyl- und/oder Carboxylgruppen sind, und
(e) 0 bis 20 mol% einer monofunktionellen Carbonsäure ist,
und wobei die Stoffmengen an freien Hydroxylgruppen zwischen 30 und 350 Milliäquivalenten pro 100 g, bevorzugt zwischen 100 und 250 Milliäquivalenten pro 100 g, liegen und der Gehalt an freien neutralisierten und/oder neutralisierbaren Säuregruppen, insbesondere Phosphon- und Carbonsäuregruppen, zwischen 5 und 350 Milliäquivalenten pro 100 g, vorzugsweise zwischen 9 und 120 Milliäquivalenten pro 100 g, liegt.

2. Wasserverdünnbare Zweikomponenten-Überzugsmasse nach Anspruch 1, enthaltend ein Polyesterharz, das aus
(a) aliphatischen, aromatischen oder cycloaliphatischen Dicarbonsäuren,
(b) Hydroxy- oder Carboxyarylphosphonsäuren oder deren Salzen
(c) aliphatischen, aromatischen oder cycloaliphatischen Glykolen,
(d) zwei oder mehrereren Verbindungen, die 3 bis 6 Hydroxylgruppen und/oder Carboxylgruppen enthalten, hergestellt wird.

3. Wasserverdünnbare Zweikomponenten-Überzugsmasse nach Anspruch 1, enthaltend ein Polyesterharz, das aus
(a) Phthal-, Isophthal- und Terephthalsäure, Phthalsäureanhydrid, Adipin-, Sebacin-, Azelainsäure, 1,3-Cyclohexandicarbonsäure oder Glutarsäure sowie deren Estern,
(c) Ethylenglykol, 1,2-Propandiol, 1,3-Butandiol, 1,6-HexandioloderPerhydro-bishphenol A,
(d) zwei oder mehreren Verbindungen ausgewählt aus Trimethylolpropan, Trimethylolethan, Glycerin, Ditrimethylolpropan, Pentaerythrit, Dipentaerythrit, Dimethylolpropionsäure und Trimellithsäureanhydrid hergestellt wird.

4. Wasserverdünnbare Zweikomponenten-Überzugsmasse nach Anspruch 1, enthaltend ein Polyesterharz, das aus 1 bis 6 mol% der Komponente (b) und 8 bis 20 mol% der Komponente (d) aufgebaut ist.

5. Verwendung der wasserverdünnbaren Zweikomponenten-Überzugsmasse nach nach Anspruch 1 bis 4 zur Herstellung von Decklacken und Einschichtlacken.

6. Verwendung der wasserverdünnbaren Zweikomponenten-Überzugsmasse nach nach Anspruch 1 bis 4 zur Herstellung von Grundierungen oder Füllern.

## Claims

1. A water-thinnable two-component coating composition, comprising
1) a polyisocyanate component composed of one or more organic polyisocyanates, and
2) a polyester resin which is made up of the starting components (a), (b), (c), (d) and (e) or their ester-forming derivatives, the sum of the reactants being 100 mol% and the ratio of the sum of the hydroxyl equivalents to the sum of the carboxyl equivalents in the reactants being between 1:0.5 and 1:2.0, where
(a) is at least one dicarboxylic acid which is not a sulfo monomer,
(b) is 0 to 15 mol%, preferably 1 to 6 mol%, of at least one difunctional phosphono monomer, whose functional groups are carboxyl and/or hydroxyl groups, with at least one phosphonate group,
(c) is at least one glycol,
(d) is 5 to 40 mol% of two or more higher-functional compounds (functionality >2), whose functional groups are hydroxyl and/or carboxyl groups, and
(e) is 0 to 20 mol% of a monofunctional carboxylic acid,
the amounts of free hydroxyl groups being between 30 and 350 milliequivalents of OH/100 g, preferably between 100 and 250 meq (OH)/100 g, and the content of free neutralized and/or neutralizable acid groups, in particular phosphonic and carboxylic acid groups, being between 5 and 350 meq/100 g, preferably between 9 and 120 meq/100 g.

2. A water-thinnable two-component coating composition as claimed in claim 1, comprising a polyester resin prepared from
(a) aliphatic, aromatic or cycloaliphatic dicarboxylic acids,
(b) hydroxy- or carboxyarylphosphonic acid or salts thereof,
(c) aliphatic, aromatic or cycloaliphatic glycols,
(d) two or more compounds containing 3 to 6 hydroxyl groups and/or carboxyl groups.

3. A water-thinnable two-component coating composition as claimed in claim 1, comprising a polyester resin prepared from
(a) phthalic, isophthalic and terephthalic acid, phthalic anhydride, adipic, sebacic and azelaic acid, 1,3-cyclohexanedicarboxylic acid or glutaric acid and esters thereof,
(c) ethylene glycol, 1,2- propanediol, 1,3-butanediol, 1,6-hexanediol or perhydrobisphenol A,
(d) two or more compounds selected from the group comprising trimethylolpropane, trimethylolethane, glycerol, ditrimethylolpropane, pentaerythritol, dipentaerythritol, dimethylolpropionic acid or trimellitic anhydride.

4. A water-thinnable two-component coating composition as claimed in claim 1, comprising a polyester resin made up of 1 to 6 mol% of component (b) and 8 to 20 mol% of component (d).

5. The use of the water-thinnable two-component coating composition as claimed in as claimed in claim 1 to 4 for the preparation of topcoats and one-coat finishes.

6. The use of the water-thinnable two-component coating composition as claimed in as claimed in claim 1 to 4 for the preparation of primers or fillers.

## Revendications

1. Matière d'enduction à deux composants diluable à l'eau, contenant
1) un composant polyisocyanate constitué d'un ou plusieurs polyisocyanates organiques, et
2) une résine polyester qui est constituée des produits de départ (a), (b), (c), (d) et (e) ou de leurs dérivés formant des esters, la somme des réactants correspondant à 100 % en moles et le rapport de la somme des équivalents hydroxyle à la somme des équivalents carboxyle dans les réactants est comprise entre 1:0,5 et 1:2,0.
où
(a) est au moins un acide dicarboxylique qui ne représente pas de monomères sulfo,
(b) de 0 à 15, de préférence de 1 à 6 % en moles d'au moins un monomère phosphono bifonctionnel, dont les groupes fonctionnels sont des groupes carboxyle et/ou hydroxyle avec au moins un groupe phosphonato,
(c) au moins un glycol,
(d) de 5 à 40 % en moles de deux ou plusieurs composés à fonctionnalité supérieure (fonctionnalité > 2), dont les groupes fonctionnnels sont des groupes hydroxyle et/ou carboxyle, et
(e) de 0 à 20 % en moles d'un acide carboxylique monofonctionnel,
les quantités en groupes hydroxyle libres étant comprises entre 30 et 350 milliéquivalents de OH/100 g, de préférence entre 100 et 250 méq (OH)/100 g, et la teneur en groupes acides libres neutralisés et/ou neutralisables, plus particulièrement en groupes phosphono et acide carboxylique, et comprises entre 5 et 350 méq/100 g, de préférence entre 9 et 120 méq/100 g.

2. Matière d'enduction à deux composants diluable à l'eau selon la revendication 1, contenant une résine polyester que l'on prépare à partir
(a) d'acides dicarboxyliques aliphatiques, aromatiques ou cycloaliphatiques,
(b) d'acides hydroxy- ou carboxy-arylphosphoniques ou de leurs sels,
(c) de glycols aliphatiques, aromatiques ou cycloaliphatiques,
(d) de deux ou plusieurs composés comportant 3 à 6 groupes hydroxyle et/ou carboxyle.

3. Matière d'enduction à deux composants diluable à l'eau selon la revendication 1, contenant une résine polyester que l'on prépare à partir
(a) de l'acide phtalique, isophtalique et téréphtalique, de l'anhydride de l'acide phtalique, de l'acide adipique, sébacique, azélaïque, de l'acide 1,3-cyclohexanedicarboxylique ou de l'acide glutarique ainsi que de leurs esters,
(c) de l'éthylèneglycol, du 1,2-propanediol, du 1,3-butanediol, du 1,6-hexanediol ou du perhydrobisphénol A.
(d) de deux triméthylolpropane,le triméthyloléthane, la glycérine, le ditriméthylolpropane, le pentaérythritol, le dipentaérythritol, l'acide diméthylolpropionique ou l'anhydride de l'acide trimellitique.

4. Matière d'enduction à deux composants diluable à l'eau selon la revendication 1, contenant une résine polyester qui est constituée de 1 à 6 % % en moles du composant (b) et de 8 à 20 % en moles du composant (d).

5. Utilisation de la matière d'enduction à deux composants diluable à l'eau selon les revendications 1 à 4, pour la préparation de vernis couvrants et de vernis monocouche.

6. Utilisation de la matière d'enduction à deux composants diluable à l'eau selon les revendications 1 à 4, pour la préparation de couches d'accrochage ou de charges.
